# EUROPÄISCHE PATENTANMELDUNG

(11) **EP 2 572 939 A2**
(43) Veröffentlichungstag der Anmeldung: **27.03.2013**
(21) Anmeldenummer: 12006118.9
(22) Anmeldetag: 29.08.2012
(51) Int. Cl.: B60R 15/00, E03B 3/02, B60P 3/32, B60R 15/04, E03D 7/00, F24J 2/04, H01L 31/045

(54) **Mobiler Mehrzweckwagen**

(30) Priorität: 03.09.2011 DE 202011105321 U
(71) Anmelder: Golnik, Guido, 4058 Basel (CH)
(72) Erfinder: Golnik, Guido, 4058 Basel (CH)
(74) Vertreter: Ebert, Jutta

(57) **Zusammenfassung**

Es wird ein verschiedentlich einsetzbarer, mobiler Mehrzweckwagen vorgeschlagen, der unabhängig ist sowohl von rein stationären Energiequellen als auch von mitgeführten, in Zeitabständen auszutauschenden Energiespeichern und dessen Betrieb Umwelt und Ressourcen schonend is. Er weist ein Behältersystem auf, das aus einem an einer Außenwand des Wagens (1) angeordneten Auffangbehälter (20) für Regenwasser und aus einem Brauchwassertank (25), einem Grauwassertank und einem Urintank (33) besteht, welche beweglich unter dem Boden des Wagens (1) angeordnet sind. Eine Regenwasserleitung (24) führt vom Auffangbehälter (20) für Regenwasser in den Brauchwassertank (25), aus dem Brauchwassertank (25) führt eine Versorgungsleitung (27) zu den Armaturen eines im Innern des Wagens (1) installierten Armaturenschranks (18) und von dort zu Waschgelegenheiten (17, 9). Von den Waschgelegenheiten (17, 9) wird gebrauchtes, verschmutztes Brauchwasser über Grauwasserleitungen (30) in den Grauwassertank (31) abgeleitet. Der Wagen (1) ist mit Trockentoiletten ausgestattet, aus denen der Urin über Urinleitungen (32) in den Urintank (33) abgeleitet wird. Die Stromversorgung erfolgt aus regenerativen Energiequellen.

## Beschreibung

Die Erfindung bezieht sich auf einen mobilen Mehrzweckwagen, der sowohl als Anhängerwagen für ein Zugfahrzeug konzipiert sein kann als auch mit einem eigenen Antrieb ausgestattet sein kann und auch zu Sanitärzwecken bei unterschiedlichen und wechselnden für die Öffentlichkeit zugänglichen Veranstaltungen und Freizeitangeboten im Freien einsetzbar ist, der zumindest eine Toilette und eine Waschgelegenheit aufweist, die über ein Leitungsnetz mit kaltem und/oder warmem Wasser aus einem in dem Wagen angeordneten Behältersystem versorgt werden können.

Bei öffentlichen Veranstaltungen im Freien ist es Vorschrift, dass für ausreichend Sanitäreinrichtungen für das zu erwartende Publikum gesorgt ist. Dies kann geschehen, indem auf die Nutzungsmöglichkeit der in benachbarten, öffentlichen oder gewerblichen Gebäuden vorhandenen Sanitäreinrichtungen verwiesen wird. Dies hängt allerdings von der Zustimmung der Inhaber oder Betreiber solcher Gebäude ab, sofern die sich überhaupt in erreichbarer oder zumutbarer Entfernung vom Ort der betreffenden Veranstaltung befinden. Wo dies nicht der Fall ist, werden mobile Toilettenwagen eingesetzt, die vor Ort gebracht werden. Bekannte Toilettenwagen verfügen nur über eine wenig komfortable Mindestausstattung an Sanitäreinrichtungen. Hauptnachteil vieler bekannter Toilettenwagen ist aber, dass die anfallenden Exkremente mit frischem Trinkwasser in einen Sammeltank gespült werden und anschließend in die vorhandene Kanalisation abgeleitet werden, wozu zum einen die entsprechenden Anschlüsse an die (Trink-)Wasserversorgung und die Abwasserkanalisation erforderlich sind. Zum anderen bedeutet dies eine Vergeudung an kostbarem Trinkwasser und stellt eine Belastung für die Umwelt dar. Für eine ausreichende Stromversorgung und entsprechende Anschlüsse muss ebenfalls gesorgt sein.

Durch das deutsche Gebrauchsmuster Nr. 74 26 888 ist ein mobiler Sanitärwagen bekannt, dessen Inneneinrichtungen mittels Druckwasseranschluss versorgt werden bzw. bei dem das Dach als Wasserbehälter ausgeführt ist. Zur Aufnahme der Fäkalien und des Abwassers ist unter dem Wagen ein mit dem Auslaufstutzen des Behälters verbindbarer Fäkalienbehälter vorgesehen, der im gefüllten Zustand auf Führungsschienen mittels Laufrollen unter dem Wagen hervorgezogen und gegen einen leeren Behälter ausgetauscht werden kann. Die Entsorgung der aufgefangenen Fäkalien erfolgt dann in die Kanalisation.

Bekannt sind auch so genannte Trockentoiletten, wie sie z.B. in Flugzeugen und Omnibussen installiert sind und bei denen z.B. gemäß DE 2442380 unter dem Sitz ein Schlauchvorrat angeordnet ist. Dieser wird abschnittsweise aus dem Vorrat abgezogen und nimmt die Exkremente auf. Zur Entnahme muss der Schlauch verschlossen werden. Zur Vermeidung von Geruchsbelästigungen und um die Entstehung gesundheitsschädlicher Zersetzungsprodukte zu verhindern, werden die anfallenden Exkremente mit Chemikalien behandelt. Der Einsatz von Chemikalien an sich und die Entsorgung der chemisch behandelten Exkremente stellt wieder eine Belastung für die Umwelt und das Abwassersystem dar.

Durch die DE 2506721 ist eine so genannte Vermoderungs- oder Kompostiertoilette bekannt, die auf dem Prinzip der Trockentoiletten beruht und bei der die biologische Zersetzung durch verschiedene technische Hilfsmittel, wie Beheizung und Umrühren der Vermoderungsmasse, beschleunigt wird. Das Endprodukt soll ohne Risiko als Düngemittel einsetzbar sein.

Durch die DE-PS 34 40 862 ist ein mobiler Sanitärwagen mit verschiedenen sanitären Einrichtungen, wie Waschbecken, Toiletten, Duschen, bekannt, die über ein Rohrleitungsnetz mit kaltem und/oder warmem Wasser aus einem in dem Sanitärwagen angeordneten Behältersystem versorgt werden können. Um den Sanitärwagen unabhängig von stationären Energiequellen zu machen, soll das Behältersystem an eine Heizquelle bzw. Kühlquelle angeschlossen werden, die ebenfalls in dem Sanitärwagen angeordnet ist; auch der Primärenergieträger für die Heiz- bzw. Kühlquelle soll mit dem Sanitärwagen mitgeführt werden. Als Primärenergieträger wird Heizöl vorgeschlagen. Der Heizöl-Vorrat soll aus einem am Sanitärwagen selbst angeordneten Tank oder aus einem separat mitgeführten Tankwagen zur Verfügung gestellt werden. Zur Versorgung mit der benötigten elektrischen Energie soll ein Notstromaggregat im Sanitärwagen vorgesehen werden. Mit einem Sanitärwagen auch einen Heizöltank mitzuführen und an beliebigen Stellen, z.B. auch auf der grünen Wiese, in Freizeitparks und dergl. zur Benutzung abzustellen, ist umständlich und aufwendig und auch aus Gründen des Umweltschutzes problematisch, z.B. kann austretendes Heizöl den Boden verseuchen und auch eine Geruchsbelästigung darstellen. Bekannte Notstromaggregate bestehen aus einem Dieselmotor als Antriebsmaschine und einem Generator zur Stromerzeugung. Zur Versorgung des Dieselmotors muss wiederum ein separater Tank für das Dieselöl mitgeführt werden. Sowohl der Heizöltank als auch der Tank für das Dieselöl des Notstromaggregats können Energie immer nur über einen begrenzten Zeitraum zur Verfügung stellen, nach dem sie nachgefüllt werden müssen. Tatsächlich unabhängig von stationären Energiequellen ist dieser Sanitärwagen sonach nicht. Auch beanspruchen der Heizöltank der Tank für das Dieselöl im oder am Sanitärwagen viel Raum, der dann nicht für eine andere Nutzung zur Verfügung steht.

Durch die DE-PS 22 32 622 ist eine Klosettspülvorrichtung für ortsveränderlich aufstellbare Wasch- und/oder Toilettenkabinen mit Umlauf der Reinigungsflüssigkeit (so genannte Zirkulationsspülung) bekannt. Sie umfasst einen durch eine Filterscheibe in zwei Kammern geteilten Behälter. Die erste Kammer ist an ein Klosettbecken zur Aufnahme des Abwassers aus diesem Becken angeschlossen. Ein Frischwasser-, Desinfektionsmittel-, Fäkaliengemisch wird aus dieser Abwassersammelkammer über die erwähnte Filterscheibe filtriert und aus der hinter der Filterscheibe befindlichen zweiten Kammer mit Hilfe einer durch einen Elektromotor angetriebenen Pumpe bei Bedarf in den Spülkasten der Toilette gefördert. Gespült wird das Klosettbecken also mit einer verhältnismäßig sauberen, neutralen und desinfizierenden Flüssigkeit aus der zweiten Kammer. Nach einem Spülvorgang wird die Spülflüssigkeit mit zusätzlichem Urin und Exkrementen über eine Rückführleitung in die Abwassersammelkammer des Behälters zurückgeführt. Die Druckseite der kontinuierlich arbeitenden Pumpe ist über eine Leitung mit dem Klosettbecken verbunden, um diesem die Flüssigkeit zuzuführen, und sie ist durch eine mit einem sich beim Spülen des Klosettbeckens automatisch schließenden Ventil versehene Nebenleitung mit der ersten Kammer des Behälters verbunden. So wird erreicht, dass die im Behälter vorhandene Flüssigkeit ständig durch die Pumpe und die Nebenleitung zirkuliert, wenn keine Flüssigkeit zum Zweck der Spülung benötigt wird. Mit dieser Vorrichtung wird zwar das Problem einer ausreichenden Spülwassermenge beseitigt und es wird als Spülwasser nicht kostbares Frischwasser verschwendet, sondern geringeren hygienischen Anforderungen genügendes, so genanntes Brauchwasser benutzt wird, jedoch sind weiterhin elektrische Anschlüsse erforderlich, die nicht immer zur Verfügung stehen.

Um eine solche Vorrichtung gemäß DE 22 32 622 von stationären, elektrischen Anschlüssen unabhängig zu machen, schlägt die DE 37 17 705 vor, zur Energieversorgung Druckluft zu nutzen, die aus einem Druckluftgefäß zur Verfügung gestellt wird. Dazu wird zwischen dem Abwassersammeltank (erste Kammer des Behälters) und der Toilette eine mittels Druckluft beaufschlagbare Spülwasserpumpe angeordnet. Vorhandene Handwaschbecken werden über eine Frischwasserleitung mit Frischwasser aus einem mitgeführten Frischwassertank versorgt. Vom Frischwassertank verläuft eine Rohrleitung zu den Waschbecken und von diesen in den Abwassersammeltank, wobei auch hier eine mittels Druckluft beaufschlagbare Frischwasserpumpe dazwischen geschaltet ist. Druckluftgefäße können ebenfalls nur über eine bestimmten Zeitraum genügend Druckluft für die nötige Energieversorgung zur Verfügung stellen und müssen dann gegen neue Gefäße ausgetauscht werden.

Aufgabe der Erfindung ist es einen Mehrzweckwagen bereit zu stellen, der vorrangig als mobiler Sanitärwagen einsetzbar ist, der in einer Weiterbildung aber auch weitere, zusätzliche Nutzungsmöglichkeiten bieten kann und dabei tatsächlich autark, d.h. unabhängig von sowohl rein stationären Energiequellen als auch von mitgeführten dabei aber in Zeitabständen notwendigerweise auszutauschenden Energiespeichern betrieben werden kann. Besonders Wert gelegt wird dabei auf einen energiesparenden und Umwelt- und Ressourcen schonenden Betrieb. Der zur Verfügung stehende Raum soll möglichst optimal genutzt werden. Gleichzeitig soll aber auch ein gewisser Komfort geboten werden.

Dies wird erfindungsgemäß mit einem Mehrzweckwagen gemäß Anspruch 1 erreicht.

Nach der Erfindung wird der Mehrzweckwagen aus regenerativen Energiequellen mit Strom versorgt, die Toilette(n) sind an sich bekannte Trockentoiletten und das Behältersystem besteht aus einem Auffangbehälter für Regenwasser, einem Brauchwassertank, einem Grauwassertank und einem Urintank, wobei der Auffangbehälter für Regenwasser an einer Außenwand des Wagens angeordnet ist und der Brauchwassertank, der Grauwassertank und der Urintank unter dem Boden des Wagens angeordnet sind und auf Rollen einzeln zwecks Austausch und/oder Entsorgung des Inhalts unter dem Wagen hervor- und einschiebbar sind; dabei führt eine Regenwasserleitung vom Auffangbehälter für Regenwasser in den Brauchwassertank, aus dem Brauchwassertank führt eine Versorgungsleitung zu den Armaturen eines im Innern des Wagens installierten Armaturenschranks und von dort zu Waschgelegenheiten im Wagen, von den Waschgelegenheiten wird gebrauchtes, verschmutztes Brauchwasser über Grauwasserleitungen in den Grauwassertank abgeleitet und der Urin aus den Toiletten wird über Urinleitungen in den Urintank abgeleitet. Damit ist der erfindungsgemäße Mehrzweckwagen unabhängig von stationären Wasserversorgungsanschlüssen und Abwasseranschlüssen und auch von stationären Energiequellen, wie dem Stromversorgungsnetz. Die Stromversorgung aus regenerativen Energiequellen, wie Sonnen- und Windenergie ist Umwelt- und Ressourcen schonend. Infolge der Nutzung von Regenwasser als Brauchwasser findet keine Verschwendung an kostbarem Trinkwasser statt. Abwasserkanalisation und Kläranlagen werden weniger belastet.

Vorteilhaft besteht das Dach des Mehrzweckwagens aus Trapez- oder Wellblech und das sich in den Trapez- oder Wellblechtälern sammelnde Regenwasser wird über eine Leitung in den Auffangbehälter für Regenwasser geleitet, so dass anfallendes Regenwasser mengenmäßig gut genutzt werden kann.

Nach einer bevorzugten Ausführungsform der Erfindung ist das Dach des Wagens als Trapezdach ausgebildet und die horizontale Fläche des Trapezdaches besteht aus Trapez- oder Wellblech, in dessen Trapez- oder Wellblechtälern sich Regenwasser sammeln kann, um über eine Leitung in den Auffangbehälter für Regenwasser geleitet zu werden, und auf den Schrägen des Trapezdaches sind Photovoltaic-Module zur Stromerzeugung angeordnet. Durch die Nutzung der Sonnenenergie zur Stromversorgung wird der Mehrzweckwagen unabhängig von anderen Energiequellen.

Wenn dabei die Photovoltaic-Module in entlang der Stoßkante der Horizontalen und der Schrägen des Trapezdaches verlaufenden Scharnieren winklig ausstellbar sind, können die Module dem Sonnenstand und der Sonneneinstrahlung entsprechend ausgerichtet werden, um eine möglichst effektive Nutzung der Sonnenenergie zu erreichen.

Von den Herstellern werden gerahmte und ungerahmte Photovoltaic-Module angeboten. Wenn die Photovoltaic-Module gerahmt sind, kann auch sich in den Rahmen der Photovoltaic-Module sammelndes Regenwasser über Regenwasserleitungen und Teleskop-Regenwasserleitungen in den Auffangbehälter für Regenwasser eingeleitet werden, um die Versorgung mit ausreichend frischem Brauchwasser sicher zu stellen.

Vorteilhaft ist vor dem Eintritt der Regenwasserleitung in den Auffangbehälter für Regenwasser eine UV-Lampe angeordnet, durch die möglicherweise im Regenwasser enthaltene Keime abgetötet werden.

Nach einer Weiterbildung der Erfindung ist neben dem Auffangbehälter für Regenwasser an einer Außenwand des Mehrzweckwagens ein Wärmetauscher und Warmwassertank zur Warmwasserbereitung und Warmwasserbevorratung aus über eine Brauchwasserleitung aus dem Brauchwassertank zugeführtem Brauchwasser angeordnet. An einer benachbarten Außenwand des Wagens ist dann mindestens ein Sonnenkollektor angeordnet, aus dem der Wärmetauscher über eine Leitung mit Warmwasser versorgt werden kann. So wird vorteilhaft auch für die Warmwasserbereitung die Sonnenenergie genutzt.

Auch der Sonnenkollektor ist vorteilhaft in Scharnieren und geführt von einem Teleskoprohr winklig ausstellbbar, so dass er nach dem Sonnenstand und der Sonnenseinstrahlung ausgerichtet werden kann, um die Sonnenenergie möglichst effektiv zu nutzen.

An einer Außenwand des Mehrzweckwagens kann ein Warmluftkollektor mit Belüftungsöffnungen zur Versorgung des Innenraums mit vorgewärmter Frischluft angeordnet sein.

Nach einer bevorzugten Ausführungsform der Erfindung ist der Innenraum des Wagens durch eine Trennwand in einen ersten Raum und einen zweiten Raum mit separaten Zugängen (Türen) unterteilt, so dass je ein Sanitärraum für Damen und Herren bereit gestellt werden kann. In dem einen Raum können anschließend an die Trennwand Toilettenkabinen mit Trockentoiletten für Damen vorgesehen werden, die durch eine Kabinenwand vom übrigen Raum abgetrennt und durch eine Schiebetür in der Kabinenwand zugänglich sind.

An der den Toilettenkabinen gegenüberliegenden Wand des einen Raums können entweder weitere Toilettenkabinen mit Trockentoiletten oder Duschkabinen vorgesehen sein, die ebenfalls durch eine Kabinenwand vom übrigen Raum abgetrennt sind und durch eine Schiebetür in der Kabinenwand zugänglich sind. Der Komfort des Mehrzweckwagens wird damit erhöht.

An einer Innenwand des einen abgeteilten Raums kann eine Miniküche mit (Geschirr-)Spülbecken vorgesehen sein, wobei das (Geschirr-)Spülbecken über eine Versorgungsleitung aus dem Brauchwassertank mit frischem Brauchwasser versorgt wird und gebrauchtes bzw. verschmutztes Brauchwasser aus dem (Geschirr-)Spülbecken über eine Grauwasserleitung in den Grauwassertank abgeleitet wird. Damit wird eine weitere, wesentliche Steigerung des Komforts des Mehrzweckwagens erreicht, und der Wagen wird so tatsächlich zum Mehrzweckwagen.

Die Miniküche kann vorteilhaft in einem durch Klapptüren verschließbaren Schrank untergebracht sein.

In dem zweiten abgeteilten Raum des Innenraums kann an der Trennwand ein Technik-Einbauschrank vorgesehen sein und an der gegenüberliegenden Innenwand können Toilettenkabinen mit Trockentoiletten für Herren vorgesehen sein, die durch eine Kabinenwand vom übrigen Raum abgetrennt und durch eine Schiebetür in der Kabinenwand zugänglich sind.

An einer Seitenwand des zweiten abgeteilten Raums können auch Urinale für die Herren angeordnet sein, von denen eine Urinleitung in den Urintank führt. In den Trockentoiletten werden Feststoffe und Urin in an sich bekannter Weise separiert und der Urin ebenfalls durch die Urinleitung in den Urintank abgeführt. Auf eine chemische Behandlung im Urintank wird ganz verzichtet, so dass der im Urintank gesammelte Urin ohne weiteres als wertvolles Düngemittel für die Landwirtschaft oder für Gärtnereien genutzt werden kann.

An der den Urinalen gegenüberliegenden Seitenwand des zweiten abgeteilten Raums ist vorzugsweise mindestens ein Waschbecken vorgesehen, das über eine Versorgungsleitung mit frischem Brauchwasser aus dem Brauchwassertank versorgt werden kann.

Zweckmäßig ist in einem der beiden durch eine Trennwand abgeteilten Räume ein Armaturenschrank vorgesehen.

Auf dem Dach des Mehrzweckwagens kann außerdem ein Windrad zur Stromerzeugung vorgesehen sein, um die Stromversorgung zu verbessern und auch bei nur mäßiger Sonneneinstrahlung zu sichern.

Die Erfindung wird im Folgenden beispielhaft anhand der beigefügten Zeichnungen, die eine bevorzugte Ausführungsform des erfindungsgemäßen Mehrzweckwagens darstellen, näher beschrieben; dabei zeigen
- Fig. 1: skizzenhaft eine Draufsicht auf einen erfindungsgemäßen Mehrzweckwagen bei abgenommenem Dach,
- Fig. 2: in der Draufsicht gemäß Fig. 1 die im bzw. unter dem Mehrzweckwagen verlaufenden Rohrleitungen,
- Fig. 3: die Rückansicht und
- Fig. 4: die Vorderansicht eines Mehrzweckwagens gemäß Fig. 1 und Fig. 2,
- Fig. 5: eine Seitenansicht und
- Fig. 6: die andere Seitenansicht des erfindungsgemäßen Mehrzweckwagens.

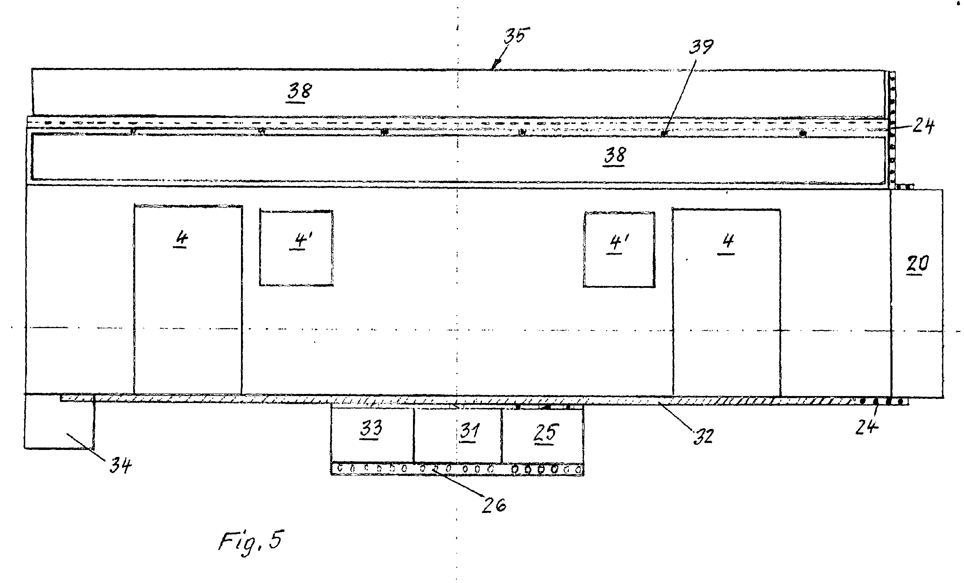

Der erfindungsgemäße Mehrzweckwagen besteht aus einem langgestreckten Wagen 1, der auf nicht dargestellten Rädern bewegbar ist. In der dargestellten Ausführungsform ist der langgestreckte Innenraum des Wagens 1 durch eine Trennwand 2 in zwei separate Räume 3a und 3b unterteilt, die jeweils durch eine Tür 4 in einer der Seitenwände des Wagens 1 zugänglich sind. Es ist von Vorteil, wenn auch jeweils ein Fenster 4' vorgesehen ist (siehe Fig. 5), um Tageslicht nutzen zu können. Der Raum 3a kann z.B. als Sanitärraum 3a den Damen, der Raum 3b als Sanitärraum 3b den Herren vorbehalten sein. Im Sanitärraum 3a der Damen sind unmittelbar hinter der Trennwand 2 zwei Toilettenkabinen 5a, 5b vorgesehen. An der gegenüberliegenden einen Schmalseite 6 des Wagens 1 können vorzugsweise zwei weitere Toilettenka-binen 5c und 5d vorgesehen sein. Wenn gewünscht, können an Stelle einer oder zweier Toilettenkabinen auch ein oder zwei Duschkabinen vorgesehen werden, wobei entsprechend Zu- und Abläufe anzupassen wären. Die Toilettenkabinen 5a, 5b und 5c, 5d oder Duschkabinen sind jeweils durch eine Kabinenwand 7 vom übrigen Raum 3a abgetrennt und durch in beiden Kabinenwänden 7 eingepasste Schiebetüren 8 zugänglich. An der einen Seitenwand des von den Toilettenkabinen 5a, 5b und 5c, 5d abgetrennten Teils des Sanitärraums 3a ist in einem Schrank eine Miniküche 9 mit Geschirrspülbecken 9 vorgesehen; der Schrank bzw. die Miniküche 9 können durch eine vorzugsweise zweiflügelige Klapptür 10 abgeschlossen werden.

In der dargestellten Ausführungsform ist im Sanitärraum 3b der Herren unmittelbar an der Trennwand 2 ein Technik-Einbauschrank 11 vorgesehen, in dem verschiedene technische Einrichtungen, wie Batteriespeicher, elektrischer Laderegler und dergleichen untergebracht sein können. Der Technik-Einbauschrank 11 ist durch eine Klapptür zugänglich bzw. verschließbar. An der dem Technik-Einbauschrank 11 gegenüberliegenden Schmalseite 12 des Sanitärraums 3b sind zwei Toilettenkabinen 13a, 13b für die Herren vorgesehen; sie sind ebenfalls durch eine Kabinenwand 14 mit Schiebetür 15 vom übrigen Sanitärraum 3b abgetrennt. An der einen Seitenwand des von den Toilettenkabinen 13a, 13b abgetrennten Teils des Sanitärraums 3b sind wasserlose Urinale 16 installiert und an der gegenüberliegenden Seitenwand können Waschbecken 17 vorzugsweise in einem durch eine zweiflügelige Klapptür verschließbaren Schrank vorgesehen sein. Zwischen dem Technik-Einbauschrank 11 und dem Schrank mit Waschbecken 17 ist Platz für einen Armaturenschrank 18. In beiden Sanitärräumen 3a und 3b ist je ein Ablauf 19 für Grauwasser vorgesehen. Die Toiletten selbst werden alle als an sich bekannte Komposttoiletten bereitgestellt.

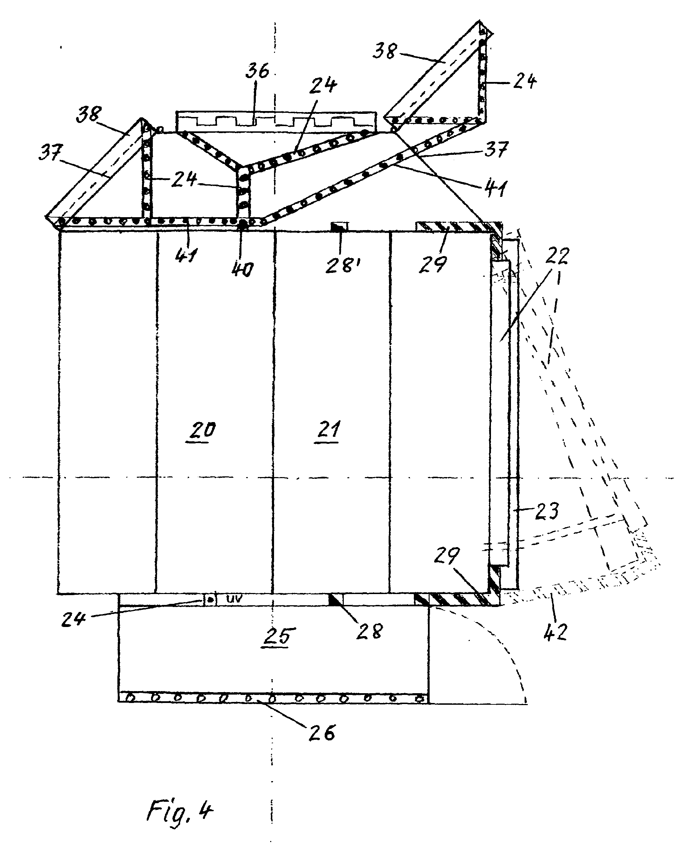

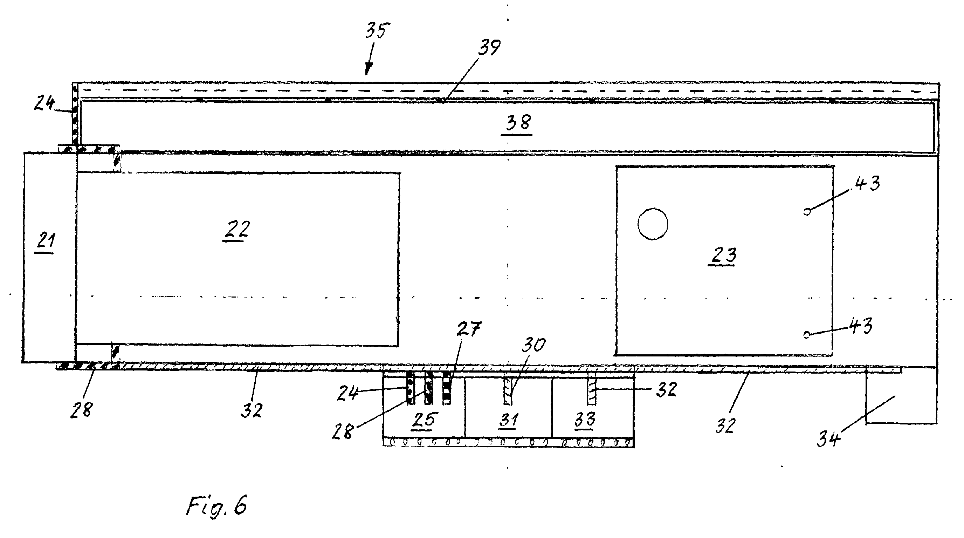

Außen an einer der Schmalseiten des Wagens 1, bei der dargestellten Ausführungsform an der Schmalseite 12 des Sanitärraums 3b für Herren, sind ein Auffangbehälter 20 für Regenwasser und ein Wärmetauscher 21 vorgesehen. Außen an der dem Wärmetauscher 21 benachbarten Seitenwand des Sanitärraums 3b ist mindestens ein Sonnenkollektor 22 zur Warmwasserbereitung (siehe auch Fig. 6) angebracht, der vorteilhafterweise winklig ausstellbar ist (siehe dazu auch Fig. 4). Um die Luftqualität im Innern des Wagens 1 zu sichern, ist außen an der Seitenwand des Sanitärraums 3a ein Warmluftkollektor 23 mit Belüftungsöffnungen 43 (siehe auch Fig. 6) zur Belüftung und Erwärmung angebracht; die Raumluft wird damit gegen Frischluft ausgetauscht und diese dabei schon vorgewärmt. Im Bereich des Technik-Einbauschranks 11 kann außerdem ein (nicht dargestelltes) Windrad ebenfalls zur Stromerzeugung vorgesehen sein.

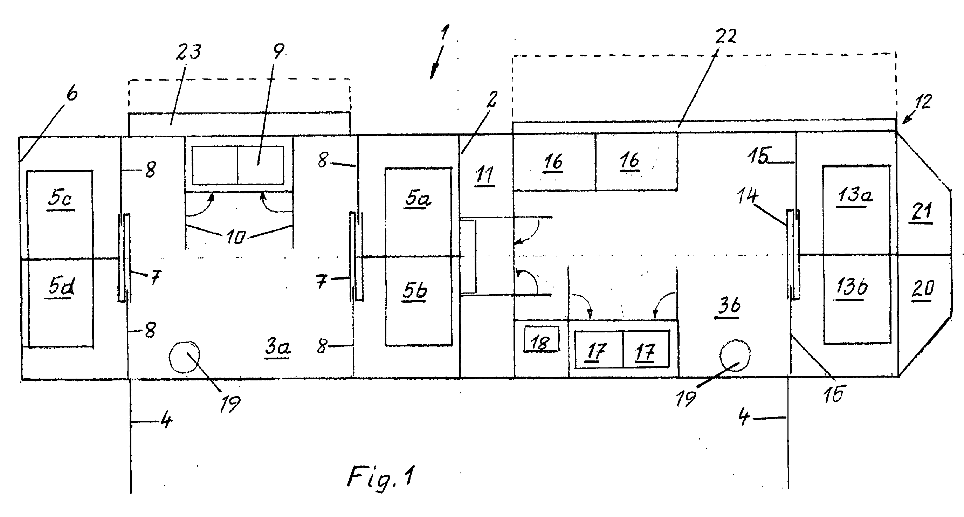

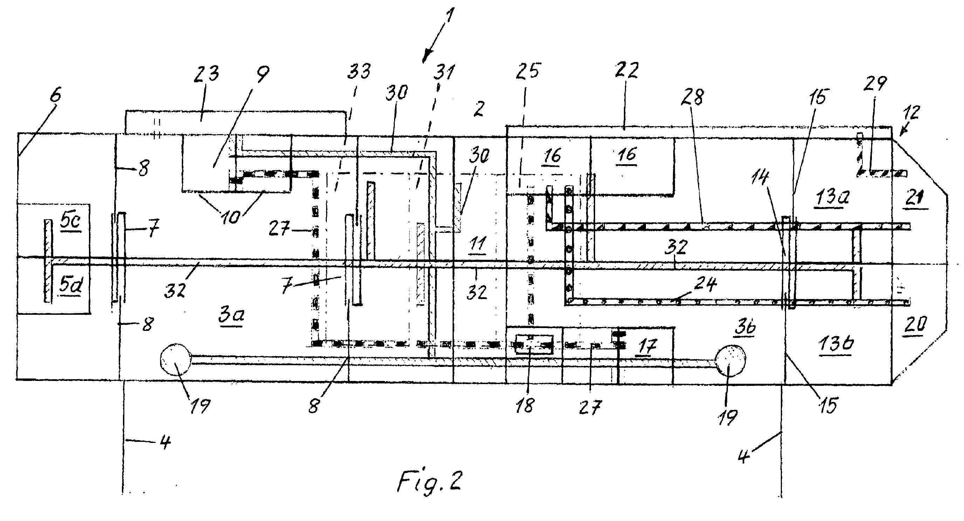

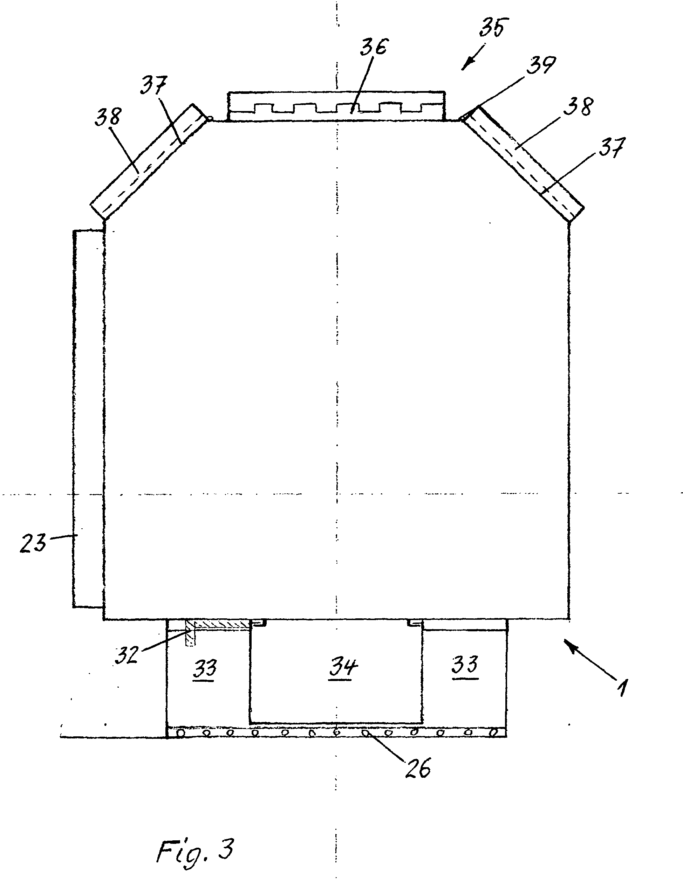

Fig. 2 entspricht Fig. 1, wobei zusätzlich die Versorgungsleitungen eingezeichnet sind. Da, wie oben erwähnt, die Toiletten alle als Komposttoiletten ausgeführt sind und die Urinale16 wasserlos betrieben werden, wird eine Wasserversorgung ausschließlich zur Nutzung an den Wasch- und Spülbecken 9, 17 benötigt. Im Auffangbehälter 20 wird Regenwasser gesammelt, das größtenteils vom Dach des Mehrzweckwagens 1 abgeleitet wird (siehe auch Fig. 4). Eine Regenwasserleitung 24 führt vom Regenwasser-Auffangbehälter 20 zu einem Brauchwassertank 25, der unter dem Boden des Mehrzweckwagens auf Rollen 26 hervor- und einschiebbar angeordnet ist; siehe dazu Fig. 4 und Fig. 6. Zwischen Regenwasser-Auffangbehälter 20 und Brauchwassertank 25, und vorzugsweise am Austritt der Regenwasserleitung 24 aus dem Regenwasser-Auffangbehälter 20, ist eine UV-Leuchte vorgesehen, die eventuell im Regenwasser vorhandene Keime abtötet, so dass im Brauchwassertank 25 keimfreies, frisches Brauchwasser gesammelt werden kann. Aus dem Brauchwassertank 25 führt eine Versorgungsleitung 27 zu den Armaturen im Armaturenschrank 18, wo sie sich gabelt und einerseits zu den Waschbecken 17 im Sanitärraum 3b und andererseits zum Spülbecken 9 der Miniküche 9 im Sanitärraum 3a führt; Waschbecken 17 und Spülbecken 9 werden so über die Versorgungsleitung 27 mit frischem Brauchwasser aus dem Brauchwassertank 25 versorgt. Über eine Brauchwasserleitung 28 wird mittels einer Umwälzpumpe frisches Brauchwasser aus dem Brauchwassertank 25 in den Wärmetauscher 21 an der einen Schmalseite 12 des Wagens 1 gepumpt. Der Wärmetauscher 21 wird zur Warmwasserbereitung von dem an der benachbarten Seitenwand befindlichen Sonnenkollektor 22 durch eine Leitung 29 mit Warmwasser versorgt, das zur Erwärmung des zugeführten frischen Brauchwassers dient. Das erwärmte Brauchwasser gelangt über die Brauchwasserleitung 28' zur Armatur 18 (siehe auch Fig. 4). Über Grauwasserleitungen 30 wird gebrauchtes, verschmutztes Brauchwasser aus den Waschbecken 17 und dem Spülbecken 9 in einen Grauwassertank 31 geleitet, der unterhalb des Wagenbodens und ebenfalls auf Rollen 26 ein- und ausschiebbar angeordnet ist. Der Urin aus den wasserlosen Urinalen 16 und aus den Komposttoiletten abgeleiteter Urin wird über Urinleitungen 32 in einen unterhalb des Wagenbodens auf Rollen 26 ein- und ausschiebbaren Urintank 33 abgeleitet, in dessen Innern sich ein formbarer Tank, z.B. ein Gummi- oder Kunststofftank, zur Aufnahme der anfallenden Flüssigkeit befindet (siehe auch Fig. 3 und Fig. 5).

Der Brauchwassertank 25, der Grauwassertank 31 und der Urintank 33 (siehe Fig. 5) bestehen vorzugsweise aus Multiplex Platten, was eine ausreichende Stabilität bei gleichzeitig geringem Gewicht gewährleistet; sie haben genormte, verschiedene Anschlüsse und verschiedene Markierungen, um Verwechslungen auszuschließen. Die Tanks sind, wie erwähnt, alle auf Rollen 26 verschiebbar, so dass sie zwecks Austausch und /oder Entsorgung des Inhalts unter dem Wagen 1 hervorgezogen und z.B. auf einen Anhänger gezogen bzw. unter den Wagen 1 eingeschoben werden können. Der in dem Urintank 33 gesammelte Urin kann bevorzugt als wertvoller Dünger in der Landwirtschaft oder in Gärtnereien Verwendung finden.

Die Komposttoiletten bilden ein geschlossenes System. Urin und Feststoffe werden bei bekannten Komposttoiletten nicht getrennt. Es sind aber auch Komposttoiletten bekannt, bei denen die Entsorgung des Urins durch Verdampfen mittels einer Bodenheizung und Thermostat erfolgt. Dieser Vorgang läuft sehr langsam ab, wodurch die Benutzung der Toiletten eingeschränkt wird. Es sind auch Komposttoiletten bekannt, bei denen der Urin durch einen durchsichtigen Füllstandsschlauch abgelassen und separat aufgefangen werden kann. Dieser Vorteil wird nach der vorliegenden Erfindung genutzt, um, wie bereits erwähnt, den Urin aus den Komposttoiletten zusammen mit dem aus den Urinalen im Urintank 33 zu sammeln. Es ergibt sich so der zweifache Vorteil, dass der Urin, ohne die Umwelt zu belasten, in der Landwirtschaft und/oder in Gärtnereien als Dünger verwendet werden kann und dass sich die Personenkapazität bzw. die Frequentierungsmöglichkeit der Komposttoiletten erhöht. Die verbliebenen Feststoffe aus den Komposttoiletten werden bevorzugt mit Kiefernborkegranulat verrührt und in einem natürlichen Prozess zu Humus zersetzt. Dieser kann wiederum in Gärtnereien oder in der Landschaftspflege Verwendung finden, da auf den Einsatz chemischer Mittel vollkommen verzichtet wird. Der Humus kann auch in Verbrennungsanlagen zur Energiegewinnung verwendet werden.

Die Energieversorgung des Mehrzweckwagens erfolgt über regenerative Energien; nur für den tatsächlichen Notfall wird ein Notstromaggregat 34 mitgeführt, das unter dem Wagenboden angebracht sein kann und im Sinne des Umweltschutzes vorzugsweise mit Pflanzenöl betrieben wird; siehe Fig. 3 und Fig. 5.

Über die Hinterräder des Mehrzweckwagens 1 kann außerdem ein Dynamo zur unterstützenden Stromerzeugung angetrieben werden.

Fig. 3 zeigt die Ansicht der einen Schmalseite (Rückansicht) des Mehrzweckwagens 1. Er weist ein Trapezdach 35 auf. Dabei besteht dessen horizontal verlaufende Fläche 36 aus einem Trapez- oder Wellblech 36; in den Trapezblech- oder Wellblechtälern wird das Regenwasser aufgefangen und über die Regenwasserleitung 24 in den Auffangbehälter 20 und zur weiteren Behandlung mittels UV-Licht und anschließend in den Brauchwassertank 25 geleitet, von wo es bei Bedarf zur Nutzung in die Wasch- und Spülbecken 9, 17 gepumpt wird (siehe oben). An den beiden Schrägen 37 des Trapezdaches 35 sind, durch die Schrägen 37 schon geneigt, Photovoltaic-Module 38 installiert, die an den Kanten zwischen der horizontal verlaufenden Fläche 36 des Trapezdaches 35 und den Schrägen 37 in Scharnieren 39 kippbar gelagert sind, so dass sie je nach Sonnenstand und Sonneneinstrahlung winklig ausgestellt und ausgerichtet werden können. An der in Fig. 3 linken Längsseite des Wagens 1 befindet sich der bereits erwähnte Warmluftkollektor 23.

Fig. 4 zeigt die andere Schmalseite (Vorderansicht) des Mehrzweckwagens 1. Zu sehen ist neben dem Auffangbehälter 20 für das Regenwasser auch ein in der dargestellten Ausführungsform etwa gleich großer Warmwassertank in Form des bereits erwähnten Wärmetauschers 21 (siehe auch Fig. 2). Regenwasser, das sich im Trapez- oder Wellblech 36 des Trapezdaches 35, aber auch in den Rahmen der Photovoltaic-Module 38 sammelt wird über die verzweigte Regenwasserleitung 24 zu einem Sammelpunkt 40 und nach Passieren einer UV-Licht-Behandlung in den Brauchwassertank 25 für frisches Brauchwasser geleitet. Um auch das sich in den Rahmen der ausstellbaren Photovoltaic-Module 38 sich sammelnde Regenwasser nutzen zu können, sind die Abschnitte der verzweigten Regenwasserleitung 24, die das von den Rahmen eingeschlossene Volumen mit dem Sammelpunkt 40 verbinden, als ein - und ausziehbare Teleskopleitungen 41 ausgebildet. Über die Brauchwasserleitung 28 wird durch eine Umwälzpumpe frisches Brauchwasser in den Warmwassertank und Wärmetauscher 21 gepumpt. Der Wärmetauscher 21 wird über eine Leitung 29 aus dem an der einen, benachbarten Längsseite des Mehrzweckwagens 1 angeordneten Sonnenkollektor 22 in einem Kreislauf mit Wärme versorgt (siehe auch Fig. 2). Wie aus Fig. 4 zu ersehen, ist auch der Sonnenkollektor 22 in einem nahe der Oberkante der Längsseite angeordneten Scharnier entsprechend der Sonneneinstrahlung winklig ausstellbar; dazu ist der Sonnenkollektor 22 an seiner Unterkante mit einem nahe der Unterkante der Längsseite befestigten ein- und ausziehbaren Teleskoprohr 42 verbunden.

### Bezugszeichenliste:

- 1: Mehrzweckwagen, Wagen
- 2: Trennwand
- 3a: Sanitärraum Damen
- 3b: Sanitärraum Herren
- 4: Türen
- 4': Fenster
- 5a, 5b, 5c, 5d: Toilettenkabinen Damen
- 6: Schmalseite Sanitärraum 3a
- 7: Kabinenwand Damen
- 8: Schiebetür
- 9: Miniküche, (Geschirr-)Spülbecken
- 10: Klapptür
- 11: Technik-Einbauschrank
- 12: Schmalseite Sanitärraum 3b
- 13a,: 13b Toilettenkabinen Herren
- 14: Kabinenwand Herren
- 15: Schiebetür
- 16: Urinale
- 17: Waschbecken
- 18: Armaturenschrank
- 19: Ablauf für Grauwasser
- 20: Auffangbehälter für Regenwasser
- 21: Wärmetauscher, Warmwassertank
- 22: Sonnenkollektor
- 23: Warmluftkollektor
- 24: Regenwasserleitung
- 25: Brauchwassertank
- 26: Rollen
- 27: Versorgungsleitung
- 28, 28': Brauchwasserleitung
- 29: Leitung Sonnenkollektor - Wärmetaucher
- 30: Grauwasserleitungen
- 31: Grauwassertank
- 32: Urinleitung
- 33: Urintank
- 34: Notstromaggregat
- 35: Trapezdach
- 36: horizontale Fläche, Trapezblech, Wellblech
- 37: Schrägen (Trapezdach)
- 38: Photovoltaic-Module
- 39: Scharniere
- 40: Sammelpunkt
- 41: Teleskopleitungen
- 42: Teleskoprohr
- 43: Belüftungsöffnungen

## Patentansprüche

1. Mobiler Mehrzweckwagen, der sowohl als Anhängerwagen für ein Zugfahrzeug konzipiert sein kann als auch mit einem eigenen Antrieb ausgestattet sein kann und zu Sanitärzwecken bei unterschiedlichen und wechselnden für die Öffentlichkeit zugänglichen Veranstaltungen und Freizeitangeboten im Freien einsetzbar ist, der zumindest eine Toilette und eine Waschgelegenheit aufweist, die über ein Leitungsnetz mit kaltem und/oder warmem Wasser aus einem in dem Wagen angeordneten Behältersystem versorgt werden können, **dadurch gekennzeichnet, dass** der Mehrzweckwagen (1) aus regenerativen Energiequellen mit Strom versorgt wird, dass die Toilette(n) an sich bekannte Trockentoiletten sind, dass das Behältersystem aus einem Auffangbehälter (20) für Regenwasser, einem Brauchwassertank (25), einem Grauwassertank (31) und einem Urintank (33) besteht, wobei der Auffangbehälter (20) für Regenwasser an einer Außenwand des Wagens (1) angeordnet ist und der Brauchwassertank (25), der Grauwassertank (31) und der Urintank (33) unter dem Boden des Wagens (1) angeordnet sind und auf Rollen (26) einzeln zwecks Austausch und/oder Entsorgung unter dem Wagen (1) hervor- und einschiebbar sind, dass eine Regenwasserleitung (24) vom Auffangbehälter (20) für Regenwasser in den Brauchwassertank (25) führt, dass aus dem Brauchwassertank (25) eine Versorgungsleitung (27) zu den Armaturen eines im Innern des Wagens (1) installierten Armaturenschranks (18) und von dort zu Waschgelegenheiten (17, 9) im Wagen (1) führt, dass von den Waschgelegenheiten (17, 9) gebrauchtes, verschmutztes Brauchwasser über Grauwasserleitungen (30) in den Grauwassertank (31) ableitbar ist und dass der Urin aus den Toiletten über Urinleitungen (32) in den Urintank (33) abgeleitet wird.

2. Mehrzweckwagen nach Anspruch1, **dadurch gekennzeichnet, dass** das Dach des Wagens (1) aus Trapez- oder Wellblech (35, 36) besteht und sich in den Trapez- oder Wellblechtälern sammelndes Regenwasser über eine Leitung (24) in den Auffangbehälter (20) für Regenwasser einleitbar ist.

3. Mehrzweckwagen nach Anspruch 1, **dadurch gekennzeichnet, dass** das Dach des Wagens (1) als Trapezdach (35) ausgebildet ist und die horizontale Fläche des Trapezdaches (35) aus Trapez- oder Wellblech besteht und sich in den Trapez- oder Wellblechtälern sammelndes Regenwasser über eine Leitung (24) in den Auffangbehälter (20) für Regenwasser einleitbar ist und dass auf den Schrägen (37) des Trapezdaches (35) Photovoltaic-Module (38) zur Stromerzeugung angeordnet sind.

4. Mehrzweckwagen nach Anspruch 3, **dadurch gekennzeichnet, dass** die Photovoltaic- Module (38) in entlang der Stoßkante der Horizontalen (35) und der Schrägen (37) des Trapezdaches (35) verlaufenden Scharnieren (39) winklig ausstellbar sind.

5. Mehrzweckwagen nach Anspruch 3 oder 4, **dadurch gekennzeichnet, dass** die Photovoltaic-Module (38) gerahmt sind und sich in den Rahmen der Photovoltaic-Module (38) sammelndes Regenwasser über Regenwasserleitungen (24) und Teleskop-Regenwasserleitungen (41) in den Auffangbehälter (20) für Regenwasser einleitbar ist.

6. Mehrzweckwagen nach den Ansprüchen 2 und / oder 5, **dadurch gekennzeichnet, dass** vor dem Eintritt der Regenwasserleitung (24) in den Auffangbehälter (20) für Regenwasser eine UV-Lampe angeordnet ist.

7. Mehrzweckwagen nach Anspruch 1, **dadurch gekennzeichnet, dass** neben dem Auffangbehälter (20) für Regenwasser an einer Außenwand des Wagens (1) ein Wärmetauscher (21) und Warmwassertank (21) zur Warmwasserbereitung und Warmwasserbevorratung aus über eine Brauchwasserleitung (28) aus dem Brauchwassertank (25) zugeführtem Brauchwasser angeordnet ist und an einer benachbarten Außenwand des Wagens (1) mindestens ein Sonnenkollektor (22) angeordnet ist, aus dem der Wärmetauscher (21) über eine Leitung (29) mit Warmwasser versorgbar ist.

8. Mehrzweckwagen nach Anspruch 7, **dadurch gekennzeichnet, dass** der Sonnenkollektor (22) in Scharnieren und geführt von einem Teleskoprohr (42) winklig ausstellbbar ist.

9. Mehrzweckwagen nach Anspruch 1, **dadurch gekennzeichnet, dass** an einer Außenwand des Wagens (1) ein Warmluftkollektor (23) mit Belüftungsöffnungen (43) zur Versorgung des Innenraums mit vorgewärmter Frischluft angeordnet ist.

10. Mehrzweckwagen nach Anspruch 1, **dadurch gekennzeichnet, dass** der Innenraum des Wagens (1) durch eine Trennwand (2) in einen Raum (3a) und einen Raum (3b) mit separaten Zugängen (Türen) (4) unterteilt ist und dass in dem einen Raum (3a) anschließend an die Trennwand (2) Toilettenkabinen (5a, 5b) mit Trockentoiletten vorgesehen sind, die durch eine Kabinenwand (7) vom übrigen Raum abgetrennt und durch Schiebetüren (8) in der Kabinenwand (7) zugänglich sind.

11. Mehrzweckwagen nach Anspruch 10, **dadurch gekennzeichnet, dass** an der den Toilettenkabinen (5a, 5b) gegenüberliegenden Wand des Raums (3a) weitere Toilettenkabinen (5c, 5d) mit Trockentoiletten vorgesehen sind, die durch eine Kabinenwand (7) vom übrigen Raum abgetrennt sind und durch Schiebetüren (8) in der Kabinenwand (7) zugänglich sind.

12. Mehrzweckwagen nach Anspruch 10, **dadurch gekennzeichnet, dass** an der den Toilettenkabinen (5a, 5b) gegenüberliegenden Wand des Raums (3a) Duschkabinen vorgesehen sind, die durch eine Kabinenwand vom übrigen Raum abgetrennt sind und durch eine Schiebetür in der Kabinenwand zugänglich sind.

13. Mehrzweckwagen nach Anspruch 10, **dadurch gekennzeichnet, dass** an einer Innenwand des einen abgeteilten Raums (3a) eine Miniküche (9) mit Geschirrspülbecken (9) vorgesehen ist und das Geschirrspülbecken (9) über eine Versorgungsleitung (27) aus dem Brauchwassertank (25) mit frischem Brauchwasser versorgbar ist und gebrauchtes bzw. verschmutztes Brauchwasser aus dem Geschirrspülbecken (9) über eine Grauwasserleitung (30) in den Grauwassertank (31) ableitbar ist.

14. Mehrzweckwagen nach Anspruch 13, **dadurch gekennzeichnet, dass** die Miniküche (9) in einem durch Klapptüren (10) verschließbaren Schrank untergebracht ist.

15. Mehrzweckwagen nach Anspruch 10, **dadurch gekennzeichnet, dass** in dem zweiten abgeteilten Raum (3b) des Innenraums an der Trennwand (2) ein Technik-Einbauschrank (11) vorgesehen ist und an der gegenüberliegenden Innenwand Toilettenkabinen (13a, 13b) mit Trockentoiletten vorgesehen sind, die durch eine Kabinenwand (14) vom übrigen Raum abgetrennt und durch Schiebetüren (15) in der Kabinenwand (14) zugänglich sind.

16. Mehrzweckwagen nach Anspruch 15, **dadurch gekennzeichnet, dass** an einer Seitenwand des abgeteilten Raums (3b) Urinale (16) angeordnet sind, von denen eine Urinleitung (32) in den Urintank (33) führt.

17. Mehrzweckwagen nach Anspruch 10 und / oder 15, **dadurch gekennzeichnet, dass** in den Trockentoiletten in an sich bekannter Weise Feststoffe und Urin separiert werden und der Urin über eine Urinleitung (32) in den Urintank (33) geleitet wird.

18. Mehrzweckwagen nach Anspruch 16, **dadurch gekennzeichnet, dass** an der den Urinalen (16) gegenüberliegenden Seitenwand mindestens ein Waschbecken (17) vorgesehen ist, das über eine Versorgungsleitung (27) mit frischem Brauchwasser aus dem Brauchwassertank (25) versorgbar ist.

19. Mehrzweckwagen nach Anspruch 10 oder 15, **dadurch gekennzeichnet, dass** in einem der beiden durch eine Trennwand (2) abgeteilten Räume (3a, 3b) ein Armaturenschrank (18) vorgesehen ist.

20. Mehrzweckwagen nach Anspruch 1, **dadurch gekennzeichnet, dass** auf dem Dach des Wagens (1) ein Windrad zur Stromerzeugung vorgesehen ist.
